# EUROPEAN PATENT APPLICATION

(11) **EP 2 184 722 A1**
(43) Date of publication of application: **12.05.2010**
(21) Application number: 08168438.3
(22) Date of filing: 06.11.2008
(51) Int. Cl.: G07F 7/08, G07F 7/10, G06Q 20/00

(54) **Money pooling in electronic payments**

(71) Applicant: Koninklijke Philips Electronics N.V., 5621 BA Eindhoven (NL)
(72) Inventor: The designation of the inventor has not yet been filed
(74) Representative: Damen, Daniel Martijn

(57) **Abstract**

An electronic money pool is set up by a group of parties each having a mobile station with a short-range wireless communication module. The group members hold their mobile stations close to one another to start a group wallet applet on each mobile station. Through a radio communication network, a connection is made with a secure server running a central group wallet application which administers all contributions to the money pool by the group members, and all payments from the money pool by the group members.

## Description

### FIELD OF THE INVENTION

The invention relates to the field of electronic payments, and more specifically to electronic payments made by, or on behalf of a group of people, using mobile stations employing a short-range wireless data communication technology.

### BACKGROUND OF THE INVENTION

In electronic payment systems, mobile stations may be used having a Short-range Wireless Data Communication (SWDC) capability. Such mobile stations may e.g. be used to effect a payment transaction at a Point Of Sale (POS) terminal. Examples of mobile stations are mobile telephones, Personal Digital Assistants (PDAs), smart phones, portable computers, wrist-worn devices, or any other suitably arranged device having an suitable output means, such as a loudspeaker and/ or a display.

SWDC may be implemented in various technologies, each of which may be used within the scope of the present invention.

One example of an SWDC technology is Bluetooth®.

Another example of an SWDC technology implemented on mobile stations is Near Field Communication (NFC) enabling an exchange of data between devices over a distance of about 10 cm, typically less than 20 cm. This technology is based on ISO 14443, and combines the interface of a smartcard and a reader thereof in a single device. An NFC device can communicate with both existing ISO 14443 (Radio Frequency IDentification - RFID) smartcards and readers, as well as with other NFC devices, and is thereby compatible with existing contactless (or wireless, RFID) infrastructure already in use for payment. Connection between NFC-enabled devices may be established almost instantly. The data transfer rate is sufficient to support payment transactions. As a result of the short range of an NFC device, an acceptable degree of security is provided, and use of an NFC device in crowded areas is possible without data communication of one NFC device interfering with data communication of another device. NFC does not require both devices engaged in a data communication to be electrically powered by a power source (e.g. a battery, or a mains supply), since one of the devices may be wirelessly powered by the other.

In the technical field of electronic payments, payments based on SWDC technology are also known as contactless payments. A service provider may e.g. provide a mobile station having SWDC capability to a user, who associates one or more credit cards with an SWDC device in the mobile station for payment. Other ways of setting up an SWDC enabled mobile station are also conceivable. To effect a payment, an SWDC enabled mobile station needs only be held or moved near to an SWDC reader. The reader can capture the card information, and a POS terminal coupled to the reader forwards the transaction data to a payment network in which the transaction data are validated, checked and authorized such that the intended transaction can be completed.

Where payments are shared between parties, it is not uncommon to have one cash pool which every party in the group contributes to. Usually, the cash pool is administered by one party in the group. Such a cash pool eases payments for e.g. entry, drinks and food at bars, dancings and restaurants, and in many other occasions.

However, cash payments are becoming more and more obsolete. Also, a party may not have enough cash money available. As a result, after a group event with cash money pooling, it is a hassle to change cash or make any banking transactions afterwards to settle every party's account.

In general, current SWDC-enabled mobile payment systems entering the market do not focus on interpersonal payments. Mobile banking and internet banking from a mobile station can be used for this, but are quite cumbersome to use. This is especially the case in situations of sharing payments within a group of people, since in the world of bank-, credit- and debit cards, creating a group money pool is not possible. Also, with the SWDC-enabled (e.g. NFC-enabled) contactless payment systems, creating a group money pool is not facilitated yet.

According to reference US 2004/0248548, an electronic payment is shared by members of a group. An amount of payment per person is calculated and is transmitted to member mobile terminals, and data for account settlement corresponding with the amount of payment is acquired from the member mobile terminals. A representative of the group makes a request to go through a procedure of electronic account settlement in a collective manner. The reference thus provides for an payment of an amount with immediate settlement among the group members. From a technical point of view, and from an organizational point of view, this requires a high amount of (electronic) communication, and pooling of money is not supported.

### SUMMARY OF THE INVENTION

It would be desirable to provide for effective contactless electronic payments for a group of parties, in which money is pooled.

It would also be desirable, when electronically pooling money in a group of parties, to be able to account for ad-hoc changes in group membership.

It would further be desirable, when electronically pooling money in a group of parties, to have a continuous insight in the current group spending and the remaining pooled money also when the parties in the group are physically apart.

To better address one or more of these concerns, in an aspect of the invention a method of electronically pooling money by a plurality of parties is provided, the method comprising providing a plurality of mobile stations each being assigned to a different party. Each mobile station comprises a short-range wireless data communication (SWDC) module, a personal wallet applet linked to the SWDC module, and a group wallet applet linked to the SWDC module. The method further comprises: providing a secure server comprising a central group wallet application; enabling data communication between the mobile stations and the secure server; running a group wallet applet by a first party on a first mobile station; communicating with the first mobile station by a further mobile station of a further party through their respective SWDC modules, thereby running a group wallet applet on the further mobile station; transferring a first money contribution by the first party by the group wallet applet on the first mobile station to a group wallet account managed by the central group wallet application on the secure server; transferring a further money contribution by the further party by the group wallet applet on the further mobile station to the group wallet account, thereby forming a money pool containing money contributions from the first party and the further party in the group wallet account; and making a payment by one of the plurality of parties through the personal wallet applet on his mobile station using the SWDC module, channeling the payment through to the group wallet account, and lowering the amount of the money contributions in the group wallet account accordingly.

In an embodiment of the present invention, a system for performing the above method is provided.

In another aspect of the invention, a method of electronically pooling money by a plurality of parties is provided, the method comprising providing a plurality of mobile stations each being assigned to a different party. Each mobile station comprises a short-range wireless data communication (SWDC) module, a personal wallet applet linked to the SWDC module, and a group wallet applet linked to the SWDC module. The method further comprises: providing a secure server comprising a central group wallet application; enabling data communication between the mobile stations and the secure server; running a group wallet applet by a first party on a first mobile station; communicating with the first mobile station by a further mobile station of a further party through their respective SWDC modules, thereby running a group wallet applet on the further mobile station; administering a first contribution by the first party by the group wallet applet on the first mobile station in the central group wallet application on the secure server; administrating a further contribution by the further party by the group wallet applet on the further mobile station in the central group wallet application on the secure server; making a payment by one of the parties through the personal wallet applet on his mobile station using the SWDC module; and administering the payment by the group wallet applet on the mobile station of the paying party in the central group wallet application on the secure server, and lowering the amount of the contributions in the central group wallet application accordingly.

In an embodiment of the present invention, a system for performing the above method is provided.

The present invention further provides for a method accommodating a new party joining the plurality of parties, a party leaving the plurality of parties, and ending the money pooling.

Since payments made in accordance with the present invention are electronic payments, any transfer of money (contributions) will be by means of transfer of data relating to such a transaction.

These and other aspects of the invention will be more readily appreciated as the same becomes better understood by reference to the following detailed description and considered in connection with the accompanying drawings in which like reference symbols designate like parts.

### BRIEF DESCRIPTION OF THE DRAWINGS

Figure 1 depicts a system for electronically pooling money in an embodiment of the invention.
Figure 2 illustrates a method of electronically pooling money in an embodiment of the present invention.
Figure 3 illustrates a method of electronically pooling money in another embodiment of the present invention.

### DETAILED DESCRIPTION OF EMBODIMENTS

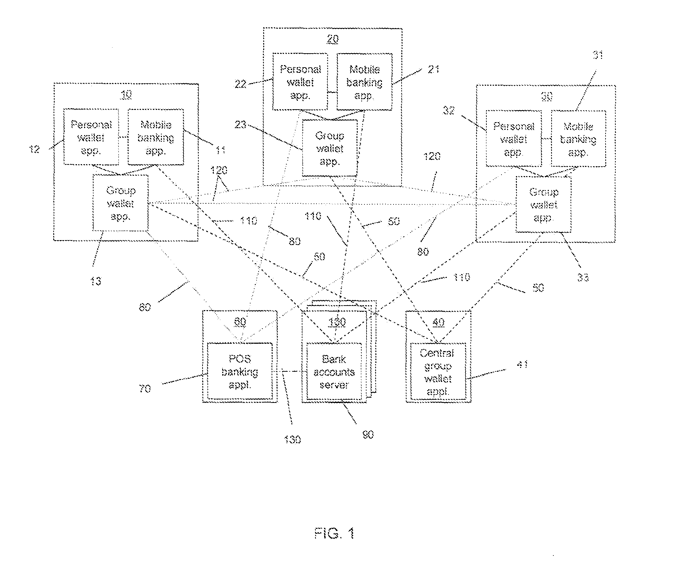

Figure 1 depicts three mobile stations 10, 20 and 30, each comprising an Short-range Wireless Data Communication (SWDC) device and function not shown in detail to enable the mobile station 10, 20, 30 to exchange data wirelessly between each other and with other devices having an SWDC device and function. For the present invention, at least two mobile stations will be used. The mobile stations 10, 20, 30 each comprise one or more processing units (not shown) having a mobile banking application (software) 11, 21, 31, respectively, (also referred to as mobile banking applet below), a personal wallet application (software) 12, 22, 32, respectively, (also referred to as personal wallet applet below), and a group wallet application (software) 13, 23, 33, respectively, (also referred to as a group wallet applet below) running therein. The term 'personal' indicates that the application relates to one party, the term 'wallet' indicates that the application functions similarly as a physical wallet. Data and command input to the respective applications is performed in a manner known per se, such as by a keyboard, by a touch screen, by voice control, or in any other suitable manner available in the mobile stations 10, 20, 30. Data output from the respective applications is also performed in a manner known per se, such as by a display device, by speech, or in any other suitable manner available in the mobile stations 10, 20, 30.

In the following, it will be assumed that each of the mobile stations 10, 20, 30 is provided with a Near Field Communication (NFC) module linked to the corresponding mobile banking applet 11,21,31, personal wallet applet 12, 22, 32, and group wallet applet 13, 23, 33. It is noted that instead of NFC, any other SWDC technology offering similar functionality can be used.

A personal wallet applet, a group wallet applet and a mobile banking applet may be pre-installed on the mobile station, or may be loaded on the mobile station through the corresponding radio communication network, through a data carrier coupled to the mobile station, through downloading from a computer or network, such as Internet, or in any other appropriate manner.

The mobile stations 10, 20, 30 have access to a communication network (e.g. a radio communication network, such as a mobile radio communication network, like a GSM network, a UMTS network, a UMA network, a WLAN network, etc.) for exchanging data with a secure server 40, such as a secure web server, running a group wallet application 41 (also referred to as a central group wallet application below). The central group wallet application 41 can be accessed by each of the group wallet applets 13, 23, 33 of the respective mobile stations 10, 20, 30, as indicated with dashed lines 50 in Figure 1, and vice versa. Payment transactions with a merchant 60 are performed via the personal wallet applets 12, 22, 32 with a POS banking application 70, as indicated with dotted lines 80 in Figure 1.

In the following, an embodiment of the pooling of money through the use of mobile stations 10, 20, 30 is described.

When a number of parties, each having a mobile station 10, 20, 30 of the kind referred to above, want to start a money pool (also referred to as a group wallet), a first party starts the group wallet applet on his mobile station, and all parties then hold their mobile stations close to one another. Via the NFC communication modules of the mobile stations, the group wallet applet 13, 23, 33 on each of the further devices is started and a connection is made between the group wallet applets 13, 23, 33 of each of the mobile stations 10, 20, 30 (as illustrated by dotted lines 120 in Figure 1) and the secure server 40 that administers the central group wallet application 41 (as illustrated by the dashed lines 50 in Figure 1). The central group wallet application 41 will administer all transactions from and to the money pool.

The group wallet applet 13, 23, 33 on every mobile station 10, 20, 30 will now do a suggestion for equal contribution to the money pool, which can be increased or decreased by at least one party, and then accepted. In an embodiment, different parties can make different contributions to the money pool. For example, a party which will only participate in the money pool for a short time, i.e. for a shorter time period than other parties, may make a smaller contribution to the money pool than the other parties.

The group wallet applet 13, 23, 33 on the mobile stations 10, 20, 30 may be fed with an expected or actual payment to be made by the plurality of parties. If the payment, divided by the number of parties, gets above the smallest contribution, then this is noted to the parties, or at least to the party making the smallest contribution, in order to take corrective measures.

Each party now selects on his mobile station 10, 20, 30 how the party's contribution should be paid via the personal wallet applet 12, 22, 32 (e.g., credit/debit card, locally stored credits, withdrawal from bank account, etc.). The group wallet applet 13, 23, 33 takes this contribution, and bank account details of the contributor, and transfers it to a group wallet account managed by the central group wallet application 41 on the secure server 40.

Alternatively, no real financial transactions are made at this stage, but the contributions are only administrated in the central group wallet application 41 as an individual intent of maximum expense for that group event.

Every party may receive information through his group wallet applet 13, 23, 33 how much everyone has contributed, and the total amount of the money pool.

When a party pays for the group to a merchant, he selects his group wallet applet 13, 23, 33 and then moves his mobile station close 10, 20, 30 to an SWDC terminal (POS terminal) of the merchant 60. At this point the group wallet applet 13, 23, 33 will use the personal wallet applet 12, 22, 32 on the same mobile station 10, 20, 30 to build a connection with the merchant's SWDC terminal and perform the transaction, which will then be channeled through to the group wallet account on the secure server. The transaction will be administered at the secure server 40 and the money pool will be adjusted accordingly. Every party's contribution will be lowered by the transaction amount divided by the number of parties.

Accordingly, interparty payment transactions are first handled via the respective group wallet applets 13, 23, 33, which then effect the necessary transactions through a bank accounts server 90 of a bank 100 via the personal wallet applets 12, 22, 32 and mobile banking applets 11, 21, 31 on the mobile stations 10, 20, 30, as indicated with dashed lines 110 in Figure 1. The group wallet applets 13, 23, 33 also provide access to the transactions made from the money pool, and by whom, through the central group wallet application 41. A secure communication between the POS banking application 70 and the bank accounts server 90 is indicated with a dash-dotted line 130 in Figure 1.

Alternatively, the party pays the transaction from his personal wallet ('pay in advance' for the whole group) through his personal wallet applet 12, 22, 32, and the transaction is only administered in the central group wallet application 41 on the secure server 40 without financial transactions relating to the group wallet (account). In this case, only one overall corrective set of transactions may be performed at the end of the group event.

When a new party wants to join a money pool of an existing group of parties, the new party selects the group wallet applet 13, 23, 33 on his mobile station 10, 20, 30 and then holds his mobile station close to the mobile station of an existing party. This will start the group wallet applet 13, 23, 33 of the new party and will connect it, e.g. automatically, to the existing money pool. The new party can now select how he would like to pay his contribution via the personal wallet applet 12, 22, 32 (e.g., credit / debit card, locally stored credits, withdrawal of bank account via a mobile banking applet, etc.). The group wallet applet 13, 23, 33 will take this contribution and transfer it to the group wallet account on the secure server, and also will administer the time of the new party joining the group.

Alternatively, as already pointed out above, no real financial transactions are made at this stage, but the contributions are only administrated as an individual intent of maximum expense for that group event.

When a party wants to leave the group, he selects this action on his group wallet applet 13, 23, 33. The group wallet applet will then check the status of his contribution on the secure server 40 and return the amount that is left to his personal wallet applet 12, 22, 32, in which he can choose where he would like to have the amount deposited. The total amount of the money pool will be adjusted accordingly.

Alternatively, in the 'pay in advance' embodiment discussed above, the central group wallet application 41 calculates which part of the group expenses needs to be shared with the leaving party. Then, taking account of the advance payments certain group members have made, the central group wallet application 41 initiates financial transaction requests to the personal wallet applets 12, 22, 32 of all members to ensure that finally everyone has paid for his share only.

At the end of the group event, one of the parties selects his group wallet applet 13, 23, 33 again, and all mobile stations of the parties are held close to one another. The group wallet applet 13, 23, 33 will then check the status of each contribution on the secure server 40 and return the amount that is left to the respective personal wallet applet. The total amount of the money pool will now be zero, and the group wallet account will be closed.

Alternatively, in the 'pay in advance' embodiment, at the end of the group event the central group wallet application 41 calculates how the group expenses need to be shared. Then, taking account of the advance payments certain parties have made, the application initiates financial transaction requests to the personal wallet applets 12, 22, 32 of all parties to make sure that finally everyone has paid for his share only, also taking account of the time when parties joined the group.

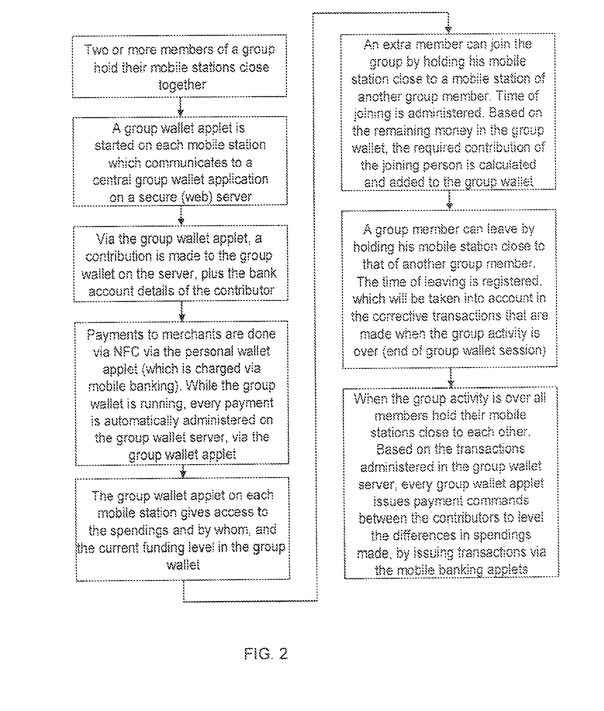

Figure 2 generally itemizes steps in an embodiment of the method and system according to the present invention in which a group wallet account is used to which contributions of parties are transferred.

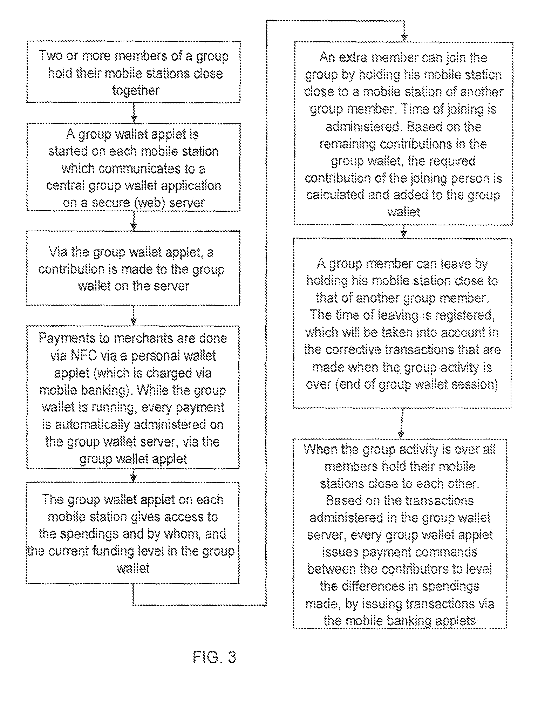

Figure 3 generally itemizes steps in a 'pay in advance' embodiment of the method and system according to the present invention.

It is noted that one party may participate in more than one group wallet (money pooling) at the time, or may alternatingly participate in different group wallets, for example on a holiday trip of a group of people going out in different groups, each group having its own money pool, where a party in one group may also be a party in another group. To deal with such circumstances, the group wallet applet on the mobile station of the party may provide for a selection of an appropriate group wallet (or money pool).

In the embodiments discussed above, it is assumed that no detailed receipt information on an item level is available during or after a transaction with a merchant, only the total amount paid. However, if this information is available, a more precise assignment of the costs to the individual group members can be made. Either during the group activity, or at the end of it, the group wallet application could then support the assignment of individual purchased items to individual parties, such that parties only pay for items that indeed can be assigned to them.

In another embodiment, the group wallet applet provides an automatic currency conversion if there are foreign parties present within the group, or if the group is visiting a foreign country.

The present invention can be used for groups of consumers in a group event. In a professional application, an available group budget measured in money can be made for different parties in a project for work, purchases, etc. Instead of money, also working hours may be pooled.

Briefly, the present invention relates to an electronic money pool which is set up by a group of parties each having a mobile station with a short-range wireless communication module. The group members hold their mobile stations close to one another to start a group wallet applet on each mobile station. Through a radio communication network, a connection is made with a secure server running a central group wallet application which administers all contributions to the money pool by the group members, and all payments from the money pool by the group members.

As required, detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. Further, the terms and phrases used herein are not intended to be limiting, but rather, to provide an understandable description of the invention.

The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language, not excluding other elements or steps). Any reference signs in the claims should not be construed as limiting the scope of the claims or the invention.

The mere fact that certain measures are recited in mutually different dependent claims does not indicate that a combination of these measures cannot be used to advantage. The term coupled, as used herein, is defined as connected, although not necessarily directly, and not necessarily mechanically.

A single processor or other unit may fulfill the functions of several items recited in the claims.

The terms application, program, software application, and the like as used herein, are defined as a sequence of instructions designed for execution on a computer system. A program, computer program, or software application may include a subroutine, a function, a procedure, an object method, an object implementation, an executable application, an applet, a servlet, a source code, an object code, a shared library/dynamic load library and/or other sequence of instructions designed for execution on a computer system. Within the scope of the present invention, a computer system may be a (part of a) mobile station, or a (part of a) secure banking server.

A computer program, software, application or applet may be stored and/or distributed on a suitable medium, such as an optical storage medium or a solid-state medium supplied together with or as part of other hardware, but also be distributed in other forms, such as via the Internet or other wired or wireless telecommunication systems.

## Claims

1. A method of electronically pooling money by a plurality of parties, comprising:
providing a plurality of mobile stations each being assigned to a different party, each mobile station comprising:
a short-range wireless data communication (SWDC) module;
a personal wallet applet linked to the SWDC module; and
a group wallet applet linked to the SWDC module;
providing a secure server comprising a central group wallet application;
enabling data communication between the mobile stations and the secure server;
running a group wallet applet by a first party on a first mobile station;
communicating with the first mobile station by a further mobile station of a further party through their respective SWDC modules, thereby running a group wallet applet on the further mobile station;
transferring a first money contribution by the first party by the group wallet applet on the first mobile station to a group wallet account managed by the central group wallet application on the secure server;
transferring a further money contribution by the further party by the group wallet applet on the further mobile station to the group wallet account, thereby forming a money pool containing money contributions from the first party and the further party in the group wallet account; and
making a payment by one of the plurality of parties through the personal wallet applet on his mobile station using the SWDC module, channeling the payment through to the group wallet account, and lowering the amount of the money contributions in the group wallet account accordingly.

2. The money pooling method of claim 1, wherein a new party joins the plurality of parties by:
starting a group wallet applet by the new party on his mobile station;
communicating with one of the plurality of mobile stations by the mobile station of the new party through their respective SWDC modules, thereby running a group wallet applet on the mobile station of the new party; and
transferring a new money contribution by the new party by the group wallet applet on the new mobile station to the group wallet account managed by the central group wallet application on the secure server.

3. The money pooling method of claim 1, wherein a party leaves the plurality of parties by:
checking a remaining part of the money contribution of the leaving party by the group wallet applet on his mobile station in the central group wallet application on the secure server; and
transferring the remaining part of the money contribution of the leaving party by the group wallet applet on the mobile station from the group wallet account to the personal wallet applet of the leaving party.

4. The money pooling method of claim 1, wherein the money pooling is ended by:
running a group wallet applet by one of the plurality of parties on his mobile station;
communicating with the mobile station of the one of the plurality of parties by the other mobile stations of the plurality of mobile stations through their respective SWDC modules, thereby running a group wallet applet on all mobile stations;
checking a remaining part of the money contribution of each party by the corresponding group wallet applet on the corresponding mobile station in the central group wallet application on the secure server; and
transferring the remaining part of the money contribution of each party by the group wallet applet on the mobile station from the group wallet account to the personal wallet applet of each party.

5. A system of electronically pooling money by a plurality of parties, comprising:
a plurality of mobile stations each being assigned to a different party, each mobile station comprising:
a short-range wireless data communication (SWDC) module;
a personal wallet applet linked to the SWDC module; and
a group wallet applet linked to the SWDC module;
a secure server comprising a central group wallet application, the secure server being adapted to have data communication with the mobile stations;
a first mobile station adapted to run a group wallet applet;
a further mobile station adapted to communicate with the first mobile station through their respective SWDC modules, thereby running a group wallet applet on the further mobile station,
wherein the system is configured for:
transferring a first money contribution by the first party by the group wallet applet on the first mobile station to a group wallet account managed by the central group wallet application on the secure server;
transferring a further money contribution by the further party by the group wallet applet on the further mobile station to the group wallet account, thereby forming a money pool containing money contributions from the first party and the further party in the group wallet account; and
making a payment by one of the plurality of parties through the personal wallet applet on his mobile station using the SWDC module, channeling the payment through to the group wallet account, and lowering the amount of the money contributions in the group wallet account accordingly.

6. A method of electronically pooling money by a plurality of parties, comprising:
providing a plurality of mobile stations each being assigned to a different party, each mobile station comprising:
a short-range wireless data communication (SWDC) module;
a personal wallet applet linked to the SWDC module; and
a group wallet applet linked to the SWDC module;
providing a secure server comprising a central group wallet application;
enabling data communication between the mobile stations and the secure server;
running a group wallet applet by a first party on a first mobile station;
communicating with the first mobile station by a further mobile station of a further party through their respective SWDC modules, thereby running a group wallet applet on the further mobile station;
administering a first contribution by the first party by the group wallet applet on the first mobile station in the central group wallet application on the secure server;
administrating a further contribution by the further party by the group wallet applet on the further mobile station in the central group wallet application on the secure server;
making a payment by one of the parties through the personal wallet applet on his mobile station using the SWDC module; and
administering the payment by the group wallet applet on the mobile station of the paying party in the central group wallet application on the secure server, and lowering the amount of the contributions in the central group wallet application accordingly.

7. The money pooling method of claim 6, wherein a new party joins the plurality of parties by:
starting a group wallet applet by the new party on his mobile station;
communicating with one of the plurality of mobile stations by the mobile station of the new party through their respective SWDC modules, thereby running a group wallet applet on the mobile station of the new party; and
administrating a new contribution by the new party by the group wallet applet on the new mobile station in the central group wallet application on the secure server.

8. The money pooling method of claim 6, wherein a party leaves the plurality of parties by:
checking the remaining part of the contribution of the leaving party by the group wallet applet on his mobile station in the central group wallet application on the secure server;
calculating by the central group wallet application which part of the group expenses needs to be shared with the leaving party, based on the contributions made and the payments made; and
initiating financial transaction requests by the central group wallet application to the personal wallet applets of the plurality of mobile stations.

9. The money pooling method of claim 6, wherein the money pooling is ended by:
running a group wallet applet by one of the plurality of parties on his mobile station;
communicating with the mobile station of the one of the plurality of parties by the other mobile stations of the plurality of mobile stations through their respective SWDC modules, thereby running a group wallet applet on all mobile stations;
calculating by the central group wallet application how the group expenses need to be shared among the plurality of parties, based on the contributions made and the payments made; and
initiating financial transaction requests by the central group wallet application to the personal wallet applets of the plurality of mobile stations.

10. A system of electronically pooling money by a plurality of parties, comprising:
a plurality of mobile stations each being assigned to a different party, each mobile station comprising:
a short-range wireless data communication (SWDC) module;
a personal wallet applet linked to the SWDC module; and
a group wallet applet linked to the SWDC module;
a secure server comprising a central group wallet application, the secure server being adapted to have data communication with the mobile stations;
a first mobile station running a group wallet applet;
a further mobile station communicating with the first mobile station through their respective SWDC modules, thereby running a group wallet applet on the further mobile station,
the system being configured for:
administering a first contribution by the first party by the group wallet applet on the first mobile station in the central group wallet application on the secure server;
administrating a further contribution by the further party by the group wallet applet on the further mobile station in the central group wallet application on the secure server;
making a payment by one of the parties through the personal wallet applet on his mobile station using the SWDC module; and
administering the payment by the group wallet applet on the mobile station of the paying party in the central group wallet application on the secure server, and lowering the amount of the contributions in the central group wallet application accordingly.

11. A mobile station for use in the method of claim 1 or 6, or the system of claim 5 or 10, the mobile station comprising:
a short-range wireless data communication (SWDC) module;
a personal wallet applet linked to the SWDC module; and
a group wallet applet linked to the SWDC module.

12. The mobile station of claim 11, wherein the SWDC module is a Near Field Communication (NFC) module.

13. A secure server for use in the method of claim 1 or 6, or the system of claim 5 or 10, the secure server comprising a central group wallet application.

14. A group wallet applet enabling a processor of a mobile station to carry out the method of claim 1 or 6.
